Europäisches Patentamt

European Patent Office

Office européen des brevets

(11) Publication number: **0 288 257**
**A2**

## EUROPEAN PATENT APPLICATION

(21) Application number: 88303544.6

(22) Date of filing: 20.04.88

(51) Int. Cl.⁴: **B32B 29/02 , B32B 5/26**

(30) Priority: 21.04.87 GB 8709401

(43) Date of publication of application:
26.10.88 Bulletin 88/43

(84) Designated Contracting States:
AT CH DE FR GB IT LI

(71) Applicant: **BRITISH SISALKRAFT LIMITED**
**Commissioners Road**
**Strood, Kent ME2 4ED(GB)**

(72) Inventor: **Waight, Stephen**
**21 Plains Avenue**
**Maidstone Kent(GB)**
Inventor: **Burdett, Christopher Leonard Robin**
**21 Norman Close**
**Maidstone Kent(GB)**
Inventor: **Hills, Keith George Hyland**
**13 The Shades Knights Place**
**Strood Kent(GB)**

(74) Representative: **Brooke-Smith, Fred et al**
**STEVENS, HEWLETT & PERKINS 5 Quality**
**Court Chancery Lane**
**London WC2A 1HZ(GB)**

(54) **Flexible membranes.**

(57) A flexible membrane for use in a lining for a roof or wall for example to provide a water-excluding but air and water vapour permeable lining for a wall or roof comprises a web (10) of a material impermeable to liquid water but permeable to air and water vapour, a layer of tear-resistant fabric (12) of open structure, the web and the fabric layer being bonded together by an adhesive layer (11) which is non-soluble in water and which is discontinuous, foraminous or porous. The resulting material although flexible has a degree of stiffness.

FIG.1

## FLEXIBLE MEMBRANES

This invention relates to flexible membranes and has a particularly useful but not exclusive application in buildings requiring a water-excluding but air and water vapour permeable membrane, for example as a lining for roofs or walls.

According to the invention there is provided a flexible membrane having a degree of stiffness comprising a web of a material which is impermeable to liquid water but permeable to air and water vapour, a layer of a fabric of open structure, said web and said fabric layer being bonded together by an adhesive layer which is non-soluble in water and which is discontinuous, foraminous or porous.

The fabric may be a woven or a bonded non-woven fabric. In one preferred construction the fabric is a spun-bonded polypropylene.

According to a preferred feature of the invention, the adhesive layer is a foraminous layer of a polyolefin material.

The said web may be of paper treated with a hydrophobic wax-resin emulsion, but is preferably a spun-bonded polyolefin web.

One embodiment of the invention will now be described by way of example, with reference to the accompanying drawings in which:

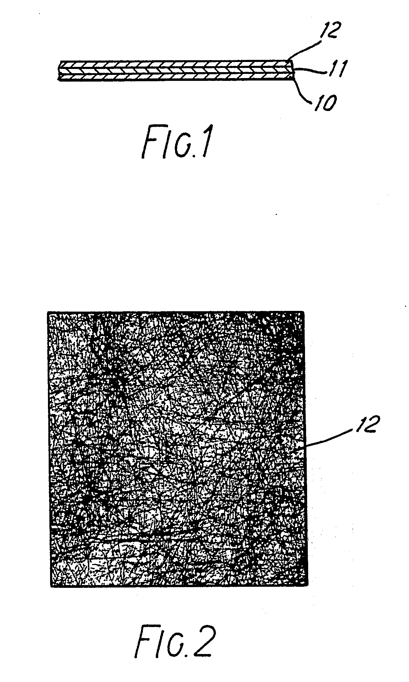

Figure 1 is a diagrammatic sectional view of a flexible membrane according to the invention, and

Figure 2 shows one face of the membrane of Figure 1.

The flexible membrane illustrated is intended to serve as a breather membrane for application to the upper side of roof rafters beneath the tiles or slates or to the outer face of a timber frame of a timber-frame building behind a wall, tiles or other weather-resistant screen. It is necessary that the membrane should exclude liquid water resulting from, say, wind-blown rain or snow but equally necessary that it should allow water vapour and air to pass outward through it, since otherwise condensation may occur within the protected construction. The membrane illustrated comprises a web 10 of a material which is impermeable to liquid water but permeable to air and water vapour, a foraminous film 11 serving as an adhesive, and a tear-resistant reinforcing fabric 12.

Web 10 is of a spun-bonded polyolefin material having in this instance a specific weight of 50 to 60 gm/sq. metre. The material marketed by du Pont under the name Tyvek 1050 B has been found to be particularly suitable for this purpose. The material is flexible but has a degree of stiffness, and has excellent qualities of liquid water resistance and air and water vapour permeability.

Fabric 12 is a spun-bonded polypropylene material having an open structure and having in this example a specific weight of 50 to 60 gm/sq. metre. The materials sold under the name Typar by du Pont de Nemours and under the name Tekton by Remay Inc. have been found to be particularly suitable for this purpose.

The bonding operation is carried out in a continuous process in which the polyethylene adhesive II is extruded in the form of a film between the moving web 10 reinforcing fabric 12. The polyethylene film 11 includes a water-containing mineral which produces bubbles of water vapour in the polymer melt. These produce interruptions in the extruded film. The size of the resulting apertures in the film can be controlled by varying the conditions under which the film is produced, but in one example the holes are generally elongate, approximately 1 cm wide and several centimetres long. While the extruded foraminous film is still hot, the three layers are pressed together so that the polyethylene film bonds the web 10 and reinforcing layer 12 together.

In modified arrangements, the membrane may treated with fire-resistant or fire-retardent substances.

The membrane should have a vapour resistance of less than 5.6 $MNSg^{-1}$ (Meganewtons seconds per gramme) in accordance with B.S. 3177 and preferably less than 0.6 $MNSg^{-1}$ in accordance with the requirements of the NHBC.

The resulting sheet product is well adapted for use in the construction industry. In addition to its qualities as a breather membrane, its slight stiffness means that it can readily be stored in roll form, and it possesses sufficient stiffness to prevent vibration or so-called drumming in wind or draghts when installed on a supporting structure. Also, the spun-bonded polypropylene fabric imparts strong tearing resistance to the membrane. The latter quality is particularly desirable when, as sometimes occurs during construction work, the membrane is secured by nails, staples or other fasteners to a supporting structure and then has to be left exposed to the wind, say overnight.

## Claims

1. A flexible membrane having a degree of stiffness, comprising a web of a material which is impermeable to liquid water but permeable to air and water vapour, a layer of fabric of open structure, said web and said fabric layer being bonded together by an adhesive layer which is non-soluble in water and which is discontinuous, foraminous or porous.

2. A membrane as claimed in claim 1, wherein the fabric is a bonded non-woven fabric.

3. A method as claimed in claim 2, wherein said fabric is a spun-bonded polypropylene fabric.

4. A method as claimed in any one of claims 1 to 3, wherein said web is made from a spun-bonded polyethylene material.

5. A method as claimed in any one of claims 1 to 3, wherein said web is a paper material treated with a hydrophobic wax-resin emulsion.

6. A method as claimed in any one of claims 1 to 5, wherein said adhesive layer comprises a foraminous layer of a polyolefin material.

7. A method as claimed in any one of claims 1 to 6, having a vapour resistance for less than 5.6 $MNSg^{-1}$.

8. A method as claimed in claim 7, having a vapour resistance of less than 0.6 $MNSg^{-1}$.

9. A method as claimed in any one of claims 1 to 8, and treated with a fire-resistant or fire-retardent substance.

Fig.1

Fig.2